# EUROPÄISCHE PATENTSCHRIFT

(11) **EP 0 475 006 B1**
(45) Veröffentlichungstag und Bekanntmachung des Hinweises auf die Patenterteilung: **22.11.1995**
(21) Anmeldenummer: 91111281.1
(22) Anmeldetag: 06.07.1991
(51) Int. Cl.: E04H 12/18, H01Q 1/12, B66F 13/00

(54) **Antrieb**
Drive means
Moyen d'entraînement

(30) Priorität: 10.09.1990 US 579944
(43) Veröffentlichungstag der Anmeldung: 18.03.1992
(73) Patentinhaber: THE WILL-BURT COMPANY, Orrville, Ohio 44667-0900 (US)
(72) Erfinder: Featherstone, Harry E., Wooster, Ohio 44691 (US)
(74) Vertreter: Hennicke, Albrecht, Dipl.-Ing.

(56) Entgegenhaltungen:
- CH-C- 276 064
- DE-A- 2 301 452
- DE-A- 3 408 163
- GB-A- 2 075 567
- US-A- 3 012 635

## Beschreibung

Die Erfindung betrifft einen Antrieb, insbesondere zum Aus- und Einfahren eines teleskopierbaren, langgestreckten Gegenstandes, wie beispielsweise eines Mastes, einer Antenne od.dgl., mit einem Antriebskopf und einer langgestreckten, steifen Antriebsvorrichtung, die den Antriebskopf zwischen einer ersten Stellung und einer zweiten Stellung im wesentlichen geradlinig bewegt und aus zwei flexiblen Ketten besteht, die im rechten Winkel zueinander angeordnet, mit je einem Ende am Antriebskopf befestigt und zwischen der ersten Stellung und der zweiten Stellung des Antriebskopfes zu der langgestreckten, steifen Antriebsvorrichtung verbindbar und verriegelbar sind.

Die Erfindung ist insbesondere zum raschen Aufrichten von teleskopierbaren Masten verwendbar, sie kann jedoch auch für verschiedene andere Zwecke verwendet werden, wo verhältnismäßig schwere Lasten annähernd geradlinig bewegt werden sollen.

Schnell aufzurichtende, teleskopierbare Masten werden für zivile, industrielle und militärische Zwecke auf der ganzen Welt benötigt. Ihre Verwendung ist immer dort besonders angezeigt, wo es notwendig ist, transportable Masten mit einem Minimum an Kraftaufwand rasch aufzustellen und wieder einzuziehen. Zusätzlich zu zahlreichen militärischen Anwendungsfällen, einschließlich der Zielermittlung, der Überwachung und der Verständigung im Felde, werden rasch aufrichtbare, teleskopierbare Masten in der Wirtschaft eingesetzt, um die verschiedensten Antennen, hochgelegene Überwachungseinrichtungen, Flutlichtlampen und Kameras zu stützen. Freistehende Masten können auch auf vielen Fahrzeugen und Schutzräumen installiert werden. In der Vergangenheit wurden teleskopartig aus- und einfahrbare Masten, die im folgenden auch zur Vereinfachung als "Teleskopmaste" bezeichnet werden, in der Regel pneumatisch betätigt. Dies erforderte luftdichte Abdichtungen zwischen benachbarten Mastabschnitten, so daß die Luft, die von unten her in den Boden des Mastes eingeleitet wurde, nicht aus dem System herausblasen und hierdurch das Zusammensinken des Mastes zur Folge haben konnte.

Ein anderes Problem, das die Brauchbarkeit pneumatisch betätigter Masten in Frage stellte, lag darin, daß sie während ihrer Betätigung beschädigt werden konnten. Wenn beispielsweise in einem Mastabschnitt durch ein Projektil ein Loch erzeugt wurde, konnte die Luft entweichen und der Mast in sich zusammensinken. Außerdem konnte manchmal ein Projektil ein Loch mit ausgefranstem Rand erzeugen, der dann verhinderte, daß der Teleskopmast wieder eingefahren werden konnte.

Ein weiteres Problem war bei pneumatisch betätigten Masten die Bildung von Eis zwischen den Mastabschnitten, welches den Teleskopmast am Ausfahren oder Einfahren hinderte.

Ein weiterer Nachteil der pneumatisch betätigten Teleskopmasten bestand darin, daß sie vor allem nur zwei Stellungen hatten. Entweder waren sie voll ausgezogen oder voll eingeschoben. Ein teilweiser Auszug des Teleskopmastes lag jedoch typischerweise außerhalb der Möglichkeiten eines transportablen, pneumatisch betätigten Mastes. Da bei einer Antenne, welche selbst den Mast darstellt, ihre Frequenz von der Höhe des Mastes abhängt, ist die Möglichkeit, den Mast teilweise auf eine gewünschte Höhe ausziehen zu können, eine wichtige Eigenschaft, die im Stand der Technik nicht leicht erreicht werden konnte. Auch wenn ein pneumatisch betätigter Teleskopmast teilweise ausgezogen wurde, war die genaue Stellung seines oberen Endes nicht bekannt. Hierdurch war es schwierig, die Frequenz des Mastes und der Antennenvorrichtung genau festzustellen, wenn sich die Antenne in ihrer voll ausgezogenen Lage befand.

Es ist eine längenveränderliche Einrichtung gemäß dem Oberbegriff des Anspruchs 1 bekannt (DE-A-34 08 163), die als teleskopierbarer Antennenmast od.dgl. verwendet werden kann und aus zwei an ihrem einen Ende miteinander verbundenen, kuppelbaren Gelenkketten besteht, deren Bewegungsebenen senkrecht zueinander stehen und von denen die Zapfen der gegeneinander schwenkbaren Glieder der einen Kette Vorsprünge aufweisen, die zwischen die mit Hülsen versehenen Gelenkbolzen der anderen Kette eingreifen, wodurch sich die Ketten gegenseitig versteifen. Damit die Vorsprünge an den Gelenkzapfen der einen Kette aus den Zwischenräumen der anderen Kette nicht wieder austreten können, sind an jedem Gelenkzapfenvorsprung der einen Gelenkkette und/oder allen Hülsen der zweiten Gelenkkette Verriegelungsvorrichtungen notwendig, die bei der bekannten Einrichtung von federbelasteten Kugeln oder Aus- und Abfräsungen der Vorsprünge oder Gelenkhülsen gebildet werden.

Aufgabe der Erfindung ist es, einen Antrieb der eingangs näher erläuterten Art mit zwei sich gegenseitig versteifenden Ketten so auszubilden, daß die eine der beiden Ketten sich im gestreckten Zustand selbst versteift und von der anderen Kette verriegelt wird und gleichzeitig diese versteift und verriegelt, wobei die Versteifungs- und Verriegelungselemente sehr einfach ausgebildet sind und kaum dem Verschleiß unterliegen.

Diese Aufgabe wird mit der Erfindung dadurch gelöst, daß die eine Kette eine treibende Kette ist, an deren miteinander verbundenen Kettengliedern erste und zweite Plattenelemente befestigt sind, die sich bei gestreckter Kette gegeneinander abstützen und die Kette versteifen und daß die andere Kette eine angetriebene Kette ist, an deren Kettengliedern vorspringende, erste und zweite Stütz- und Verriegelungselemente befestigt sind, welche die Plattenelemente der treibenden Kette in deren gestrecktem ersten Abschnitt abstützen und halten.

Besonders zweckmäßig ist es, wenn die ersten und zweiten Plattenelemente an den Kettengliedern der treibenden Kette derart montiert sind, daß sie im gestreckten, ersten Abschnitt der Kette in der gleichen Ebene liegen und mit ihren einander zugewandten Randflächen gegeneinanderstoßen, von denen einzelne Randflächen Ausnehmungen aufweisen, in welche die zweiten Stütz- und Verriegelungselemente eingreifen können, um die Plattenelemente zu halten und mitzunehmen.

Die Stütz- und Verriegelungselemente können Nuten aufweisen, mit welchen sie einen Rand der Plattenelemente übergreifen und festhalten.

Die vorspringenden Stütz- und Verriegelungselemente können an den Kettengliedern der angetriebenen Kette flexibel befestigt sein. Ferner sind die treibende Kette und die angetriebene Kette vorzugsweise Laschenketten, bei denen im ersten Abschnitt die Kettenglieder der treibenden Kette unter einem Winkel zu den Kettengliedern der angetriebenen Kette angeordnet sind und wobei mindestens eine der beiden Ketten einen zweiten, flexiblen Kettenabschnitt aufweist, der sich quer zu dem gestreckten ersten Abschnitt bis zu einer Kettenvereinigungsstelle erstreckt.

Bevor sich die Ketten miteinander zu dem teleskopierbaren, langgestreckten Gegenstand verbinden, können sie auf Kettentrommeln aufgewickelt sein. Hierdurch kann der Raumbedarf bedeutend verringert werden, der für die Antriebsvorrichtung eines teleskopierbaren Mastes erforderlich ist. Um die antreibende Kette zu betätigen, sind an der Kettenvereinigungsstelle Vorschubmittel und Stützmittel für die Ketten vorgesehen. Als Vorschubmittel dient zweckmäßig ein Antriebskettenstern, der mit konventionellen Mitteln, wie einem Motor und einem Zahnradgetriebe drehend angetrieben wird. Der Antriebskettenstern kann eine im wesentlichen zylindrische Umfangsfläche mit mehreren Kettennuten aufweisen, die auf der Umfangsfläche einen im wesentlichen gleichen Abstand voneinander haben und in die die Rollen der treibenden Kette eingreifen. Die zylindrische Umfangsfläche hat die Aufgabe, die aufeinanderfolgenden Plattenelemente gegeneinander zu pressen und hierdurch benachbarte Kettenglieder zu versteifen. Hierbei drückt die zylindrische Umfangsfläche die Plattenelemente gleichzeitig gegen die angetriebene Kette, wodurch die Steifigkeit der Kette möglicherweise vermindert wird. Es ist deshalb zweckmäßig, an der Kettenvereinigungsstelle Vorschubmittel und Stützmittel für die Ketten vorzusehen, wobei die Stützmittel an einem Lagerblock angeordnet sein können, der mit Federmitteln gegen die miteinander verbundenen Ketten gedrückt wird, wobei das Vorschubmittel, nämlich die Umfangsfläche des Antriebskettensternes, als Widerlager dient. Durch das Stützmittel werden die Plattenelemente der treibenden Kette gegen den Kettenstern gedrückt gehalten und die Plattenelemente können an der Versteifungsstelle nicht ausknicken.

Der als Vorschubmittel dienende, drehend angetriebene Kettenstern nimmt in seinen Kettennuten die Rollen der treibenden Kette auf, während an seiner Umfangsfläche die Plattenelemente anliegen. Die Stützmittel können Stützrollen für die Plattenelemente der antreibenden Kette und zwischen den Stützrollen angeordnete Gleit- oder Wälzflächen für die angetriebene Kette aufweisen. Zweckmäßig kann der Antriebskopf mit einem Kugelgelenk am innersten Teil eines zu teleskopierenden Gegenstandes befestigt werden.

Wie bereits erwähnt, sind die Ketten zweckmäßig Laschenketten und die Laschen eines jeden Kettengliedes der antreibenden Kette sind mit einem Plattenelement U-förmig verbunden, wobei die Länge des Plattenelementes dem Achsabstand der Gelenkbolzen des jeweiligen Kettengliedes entspricht.

Die Laschen eines jeden Kettengliedes der antreibenden Kette können mit einem Plattenelement aus einem Stück bestehen, während die Stütz- und Verriegelungselemente von den umgebogenen Enden der auf einer Seite der angetriebenen Kette angeordneten Außenlaschen der Kettenglieder gebildet werden.

Die Ketten können aus Eisenmetallen, Nichteisenmetallen oder nicht-metallischen Materialien hergestellt werden und man erkennt, daß die flexiblen Antriebselemente für einen teleskopierbaren Mast od.dgl. auf verhältnismäßig kleinem Raum leicht untergebracht werden können und daß es möglich ist, einen teleskopierbaren Mast auch in eine Zwischenstellung zwischen der voll ausgezogenen Stellung und der voll eingeschobenen Stellung zu bewegen und dort zu arretieren.

Weitere Merkmale und Vorteile der Erfindung ergeben sich aus der nachfolgenden Beschreibung und den Zeichnungen, in denen bevorzugte Ausführungsformen der Erfindung an Ausführungsbeispielen näher erläutert sind. Es zeigt:
- Fig. 1: einen teleskopierbaren Mast mit einer steifen Antriebsvorrichtung zum Teleskopieren der Mastabschnitte in eine beliebige Stellung in voll ausgezogenem Zustand in einer seitlichen Ansicht und teilweise in einem senkrechten Schnitt;
- Fig. 2: einen auf einem Lastkraftwagen angeordneten teleskopierbaren Mast in einer bevorzugten Ausführungsform der Erfindung in einer seitlichen Ansicht;
- Fig. 3: eine perspektivische Teildarstellung des ersten treibenden Abschnitts und des ersten angetriebenen Abschnitts der Antriebsvorrichtung in ihrer versteiften, verriegelten Lage;
- Fig. 4: den mit dem ersten angetriebenen Abschnitt verriegelten ersten antreibenden Abschnitt der Antriebsvorrichtung im Inneren der ineinandergeschachtelten Mastabschnitte in einer Teilansicht und teilweise im Schnitt;
- Fig. 5: den Gegenstand der Fig. 4 in einem Teilschnitt nach Linie 5-5;

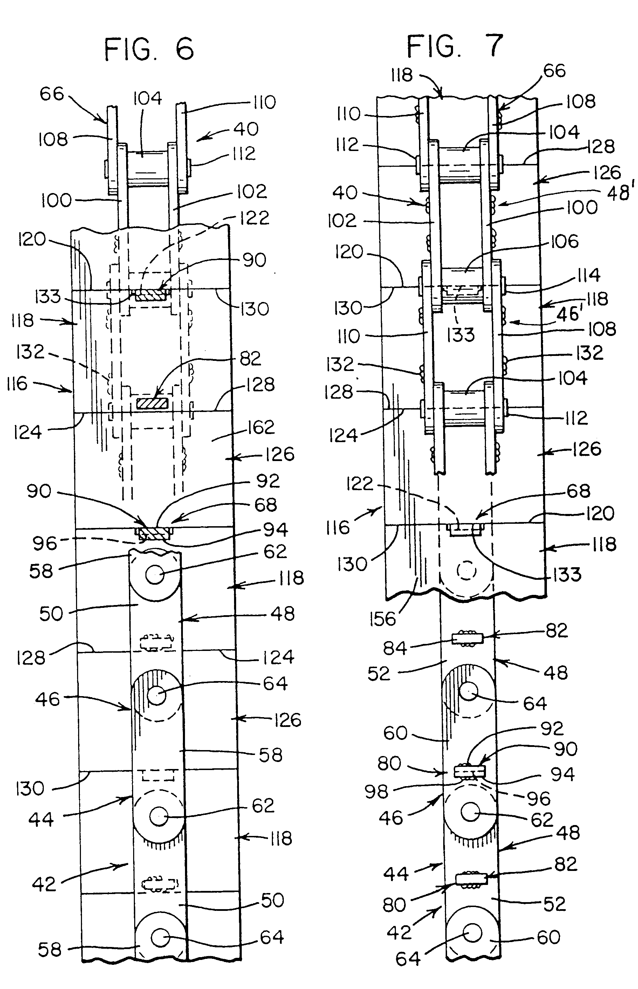

- Fig. 6: den Gegenstand der Fig. 4 in einer Ansicht in Richtung der Pfeile 6-6 gesehen;
- Fig. 7: eine Ansicht des Gegenstandes der Fig. 4 in Richtung der Pfeile 7-7 gesehen;
- Fig. 8: die Verbindungsstelle am Antriebskettenstern zwischen dem ersten und zweiten treibenden Abschnitt und die Wirkungsweise der Vorschub- und Stützmittel zum Anpressen der getriebenen Kette und der antreibenden Kette gegen den Antriebskettenstern in einer seitlichen Teilansicht in vergrößertem Maßstab und teilweise im Schnitt;
- Fig. 9: den Gegenstand der Fig. 8 in einem Horizontalschnitt nach Lini 9-9;
- Fig. 10: den Gegenstand der Fig. 9 in einem vertikalen Teilschnitt nach Linie 10-10;
- Fig. 11: den Mastfuß mit der versteiften, sich in Längsrichtung aufwärts durch die teleskopierbaren Mastabschnitte erstreckenden Antriebsvorrichtung in einer seitlichen Ansicht und teilweise im Schnitt;
- Fig. 12: den Gegenstand der Fig. 11 in einem horizontalen Diametralschnitt;
- Fig. 13: die Verbindungsstelle der steifen Antriebsvorrichtung mit dem innersten Mastabschnitt in einer seitlichen Ansicht und teilweise im Vertikalschnitt;
- Fig. 14: den ersten treibenden Abschnitt und den ersten angetriebenen Abschnitt in der verriegelten Stellung der Antriebsvorrichtung in einer zweiten Ausführungsform in einer seitlichen Teilansicht und teilweise im Schnitt;
- Fig. 15: den Gegenstand der Fig. 14 in einem Schnitt nach Linie 15-15;
- Fig. 16: ein inneres und ein äußeres Kettenglied der treibenden Kette, die aufeinander folgen, in einer perspektivischen, auseinandergezogenen Darstellung;

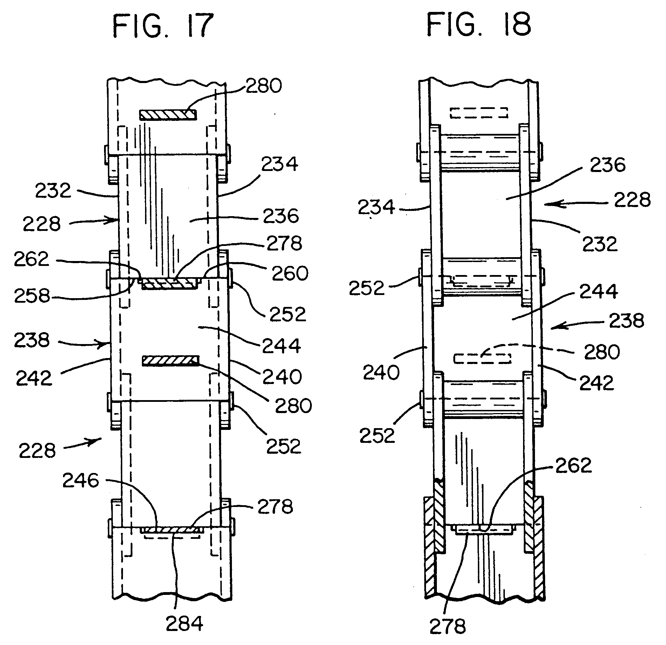

- Fig. 17: den Gegenstand der Fig. 14 in einem Teilschnitt nach Linie 17-17;
- Fig. 18: den Gegenstand der Fig. 14 in einer Teilansicht und teilweise im Schnitt nach Linie 18-18;
- Fig. 19: eine dritte Ausführungsform des mit dem getriebenen ersten Abschnitt verriegelten ersten antreibenden Abschnittes in einer seitlichen Teilansicht und
- Fig. 20: den Gegenstand der Fig. 19 in einem senkrechten Schnitt nach Linie 20-20.

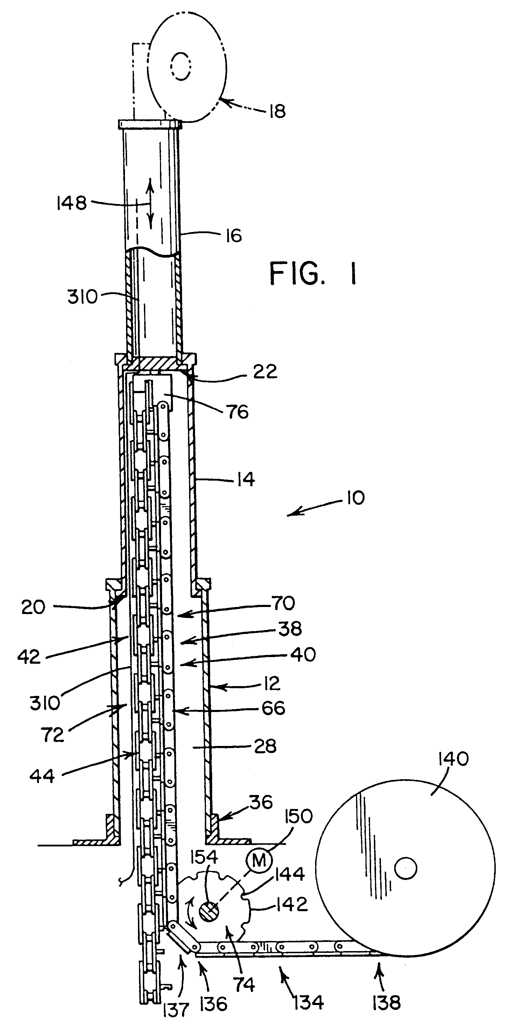

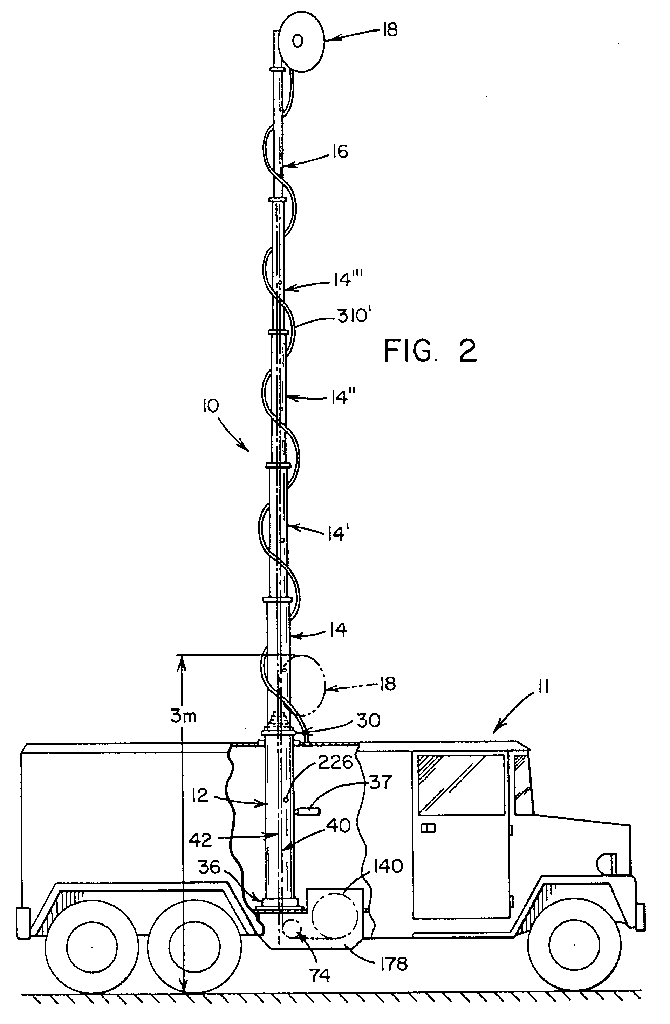

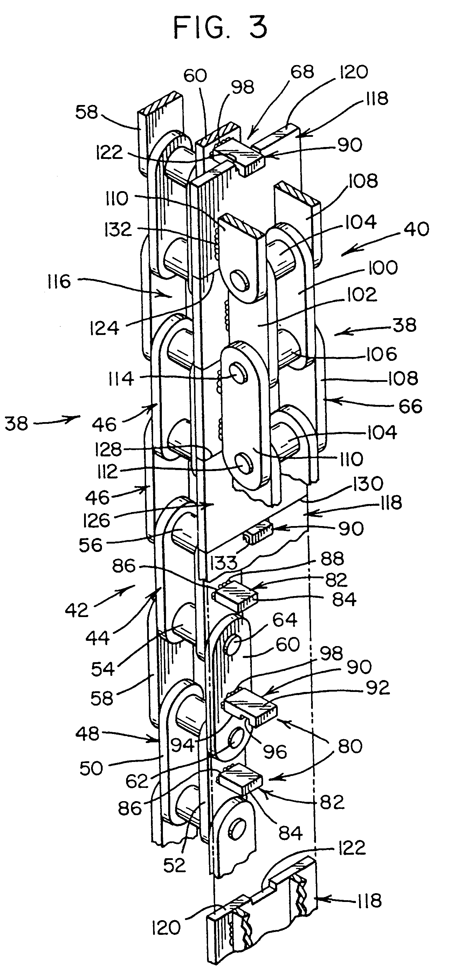

Fig. 1 zeigt einen Teleskopmast 10, der mit einem Fahrzeug, beispielsweise einem Lastkraftwagen 11 benutzt werden kann, wie er in Fig. 2 dargestellt ist. Der Teleskopmast 10 hat mehrere, untereinander verbundene Mastabschnitte 12 bis 16, wie dies ganz allgemein in Fig. 1 dargestellt ist. Obgleich 6 untereinander verbundene Mastabschnitte dargestellt sind, liegt es im Rahmen der vorliegenden Erfindung, jede gewünschte Anzahl von Mastabschnitten zu verwenden.

Die Höhe des Mastes beträgt zwischen 20 bis 150 Fuß, es liegt jedoch im Rahmen der Erfindung, diesen Bereich zu verlängern oder zu verkürzen. Wie in Fig. 1 dargestellt, ist der äußerste Mastabschnitt 12 stationär und auf einer beweglichen Tragkonstruktion, wie beispielsweise dem Fahrzeug 11, unbeweglich befestigt. Der innerste Mastabschnitt 16 ist an irgend einem beliebigen Arbeitsgerät 18, beispielsweise einer Antenne angeschlossen, die von dem Mast 10 getragen wird.

Wie weiter in Fig. 1 dargestellt ist, besteht jede der miteinander verbundenen Mastabschnitte 14 bis 16 aus einem zylindrischen Rohr, das nach außen sich erstreckende zylindrische Flanschen 20 oder 22 hat, die einen geringfügig kleineren Durchmesser haben als dem Innendurchmesser der in Längsrichtung aufeinander folgenden Rohre 12 bzw. 14 entspricht. Hierdurch können die Rohre in die benachbarten Rohre teleskopartig ein- bzw. aus diesen herausfahren. Die zylindrischen Flanschen sind wichtig, weil sie auch eine Lagerfläche zwischen den zylindrischen Rohren darstellen.

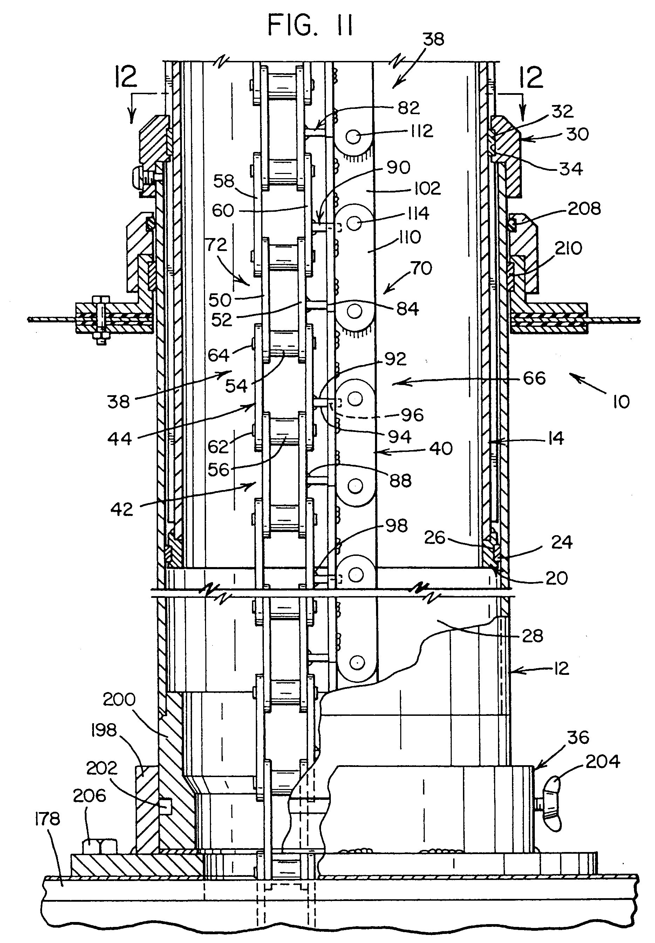

Aus Fig. 11 geht hervor, daß in einer Nute 26 im zylindrischen Flansch 20 eine Dichtung 24 angeordnet sein kann, um den inneren Hohlraum 28 des Rohres 12 abzudichten. Zusätzlich verfügt jedes Rohr über einen nach innen gerichteten, zylindrischen Flansch 30, der eine Dichtung 32 aufweist, die in einer Nute 34 angeordnet ist. Die übliche Dichtung 32 wirkt im allgemeinen gegen die zylindrische Außenfläche des jeweils benachbarten, weiter innen liegenden Mastabschnittes 14, 14', 14'', 14''' und 16 und hält unerwünschte Elemente, beispielsweise Kondenswasser davon ab, sich zwischen benachbarten Rohren zu sammeln. Konstruktionselemente, die ein Bezugszeichen mit einem, zwei oder drei Indexstrichen aufweisen, sind mit demjenigen Konstruktionselement im wesentlichen identisch, das mit dem gleichen Bezugszeichen ohne Strichindex versehen ist. Es liegt im Rahmen der vorliegenden Erfindung, jede andere Art Dichtung vorzusehen oder die Dichtung auch fortzulassen, falls dies gewünscht wird.

Typischerweise werden die einzelnen Mastabschnitte aus Rohren und Ringen aus hochfesten, wärmebehandelten, anodisierten Aluminiumlegierungen hergestellt. Es liegt aber auch im Rahmen der vorliegenden Erfindung, diese Rohre aus anderen Materialien, wie beispielsweise Kohlefaserfolien herzustellen, die insofern vorteilhaft sind, weil sie ein im Verhältnis zu ihrer hohen Festigkeit geringes Gewicht haben. Außerdem können diese Materialien leicht in eine von der Kreisform abweichende Querschnittsform gebracht werden, falls dies gewünscht wird.

Der unterste Mastabschnitt 12 ist typischerweise in einem Flansch 36 angeordnet, in dem der Mast 12 in irgend einer bekannten Weise drehbar gelagert ist. Hierbei kann ein Handgriff 37 (Fig. 2) am Mast befestigt sein, um den teleskopierbaren Mast 10 in jede gewünschte Lage zu drehen.

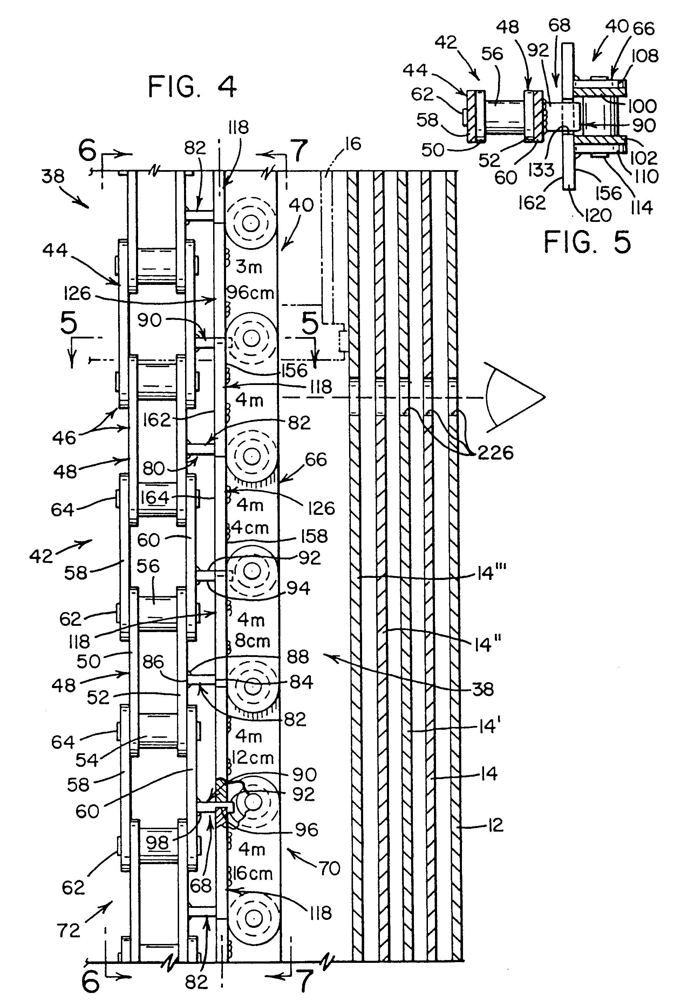

Die vorliegende Erfindung richtet sich in erster Linie auf eine steife Antriebsvorrichtung 38, mit der die Mastabschnitte 14 und 16 in jede gewünschte Lage zwischen einer nicht dargestellten, voll eingeschobenen Stellung und einer in Fig. 2 dargestellten, voll ausgezogenen Stellung teleskopiert werden können. Die steife Antriebsvorrichtung 38 besteht aus mindestens zwei flexiblen Antriebskomponenten oder -elementen 40 und 42, mit dem die miteinander verbundenen Mastabschnitte 10 genau in Stellung gebracht werden. Das flexible Antriebselement 42 hat eine angetriebene Kette 44, die aus mehreren, untereinander verbundenen, angetriebenen Kettengliedern 46 und 48 besteht. Die Kettenglieder 46 und 48 sind, wie dies in Fig. 4 dargestellt ist, als Kettenglieder einer Rollen- oder Laschenkette ausgebildet. Ein inneres Kettenglied 48 der angetriebenen Kette besteht aus zwei Innenlaschen 50 und 52 und zwei Rollen 54 und 56, die von nicht näher dargestellten Laufbüchsen getragen werden, die zwischen den Innenseiten oder Innenlaschen 50 und 52 angeordnet sind. Anschließend an die inneren Kettenglieder 48 sind diese mit äußeren Kettengliedern 46 verbunden, deren Außenlaschen 58 und 60 durch Stifte oder Zapfen 62 und 64 verbunden sind. Diese Stifte 62 und 64 befinden sich im Inneren der Hülsen, welche die Rollen 54 und 56 tragen. Die Enden der Zapfen 62 und 64 können an den Außenlaschen 58 und 60 in jeder beliebigen Weise befestigt sein.

Wie aus den Fig. 3 bis 5 hervorgeht, ist die angetriebene Kette 44 des angetriebenen Elementes 42 unmittelbar neben der treibenden Kette 66 des Antriebselementes 40 angeordnet. Das Abstandverhältnis zwischen dem treibenden Element 40 und dem angetriebenen Element 42 ermöglicht es dem Verriegelungsmechanismus 68, die angetriebene Kette 44 mit der treibenden Kette 46 zu verbinden. Hierbei bewirkt die Verbindung zwischen dem ersten treibenden Abschnitt 70 und dem ersten angetriebenen Abschnitt 72, daß eine steife Antriebsvorrichtung 38 gebildet wird.

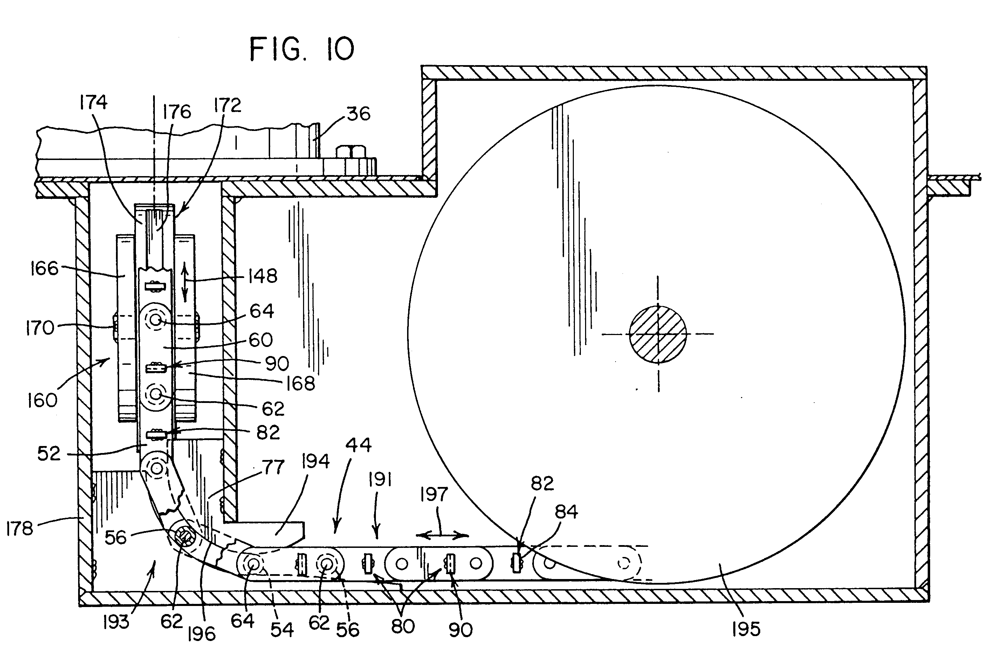

Wie aus Fig. 1 hervorgeht, sind der erste treibende Abschnitt 70 und der erste angetriebene Abschnitt 72 unmittelbar nebeneinander angeordnet. Der erste treibende Abschnitt 70 erstreckt sich von einem Antriebskettenstern 74 zu einem Anschlußglied 76. In ähnlicher Weise erstreckt sich auch der erste angetriebene Abschnitt 72 von einem Kettenlängsführungselement 77 (Fig. 10) zu dem Anschlußglied 76.

Wendet man sich nun den Konstruktionseinzelheiten des Verriegelungsmechanismus 68 zu, so erkennt man, daß jedes Kettenglied der angetriebenen Kette an diesem befestigte Vorsprünge 80 aufweist, mit denen die Kettenglieder 46 der angetriebenen Kette mit den Kettengliedern 66 der treibenden Kette im ersten Antriebsabschnitt 70 verbunden sind. Die Vorsprünge 80 bestehen aus mehreren, ersten vorspringenden Elementen oder Stützelementen 82, die vorzugsweise aus einem Stab hergestellt sind, der ein im wesentlichen flaches, erstes Ende 84 mit im wesentlichen rechteckigem Querschnitt aufweist. Die ersten vorspringenden oder Stützelemente 82 sind mit ihrem zweiten Ende 86 an Innenlaschen 52 der Kettenglieder 46 befestigt. Die ersten vorspringenden oder Stützelemente 82 erstrecken sich von dem ersten, gestreckt verlaufenden, angetriebenen Abschnitt 72 nach außen. Der Anschluß des ersten, vorspringenden oder Stützelementes 82 an der Innenlasche 52 kann auf jede beliebige Weise, beispielsweise durch eine Schweißverbindung 88 erfolgen. Es liegt jedoch im Rahmen der vorliegenden Erfindung, das vorspringende Element 82 auch auf andere Weise anzuschließen, beispielsweise es als integrale Komponente der Innenlasche 52 auszuführen.

Zu den Vorsprüngen 80 gehören auch mehrere zweite vorspringende oder Verriegelungselemente 90, die aus einem Stab von im wesentlichen rechteckigem Querschnitt hergestellt sind und eine im wesentlichen flache Oberfläche 92 und eine im wesentlichen flache Unterfläche 94 haben. Die flache Unterfläche 94 hat einen in ihr eingeformten Vorsprung- oder Verriegelungsschlitz 96. Die zweiten oder Verriegelungselemente 90 sind mit Hilfe einer Schweißverbindung 98 jeweils an einer Außenlasche 60 befestigt.

Obgleich beide vorspringenden Elemente 82 und 90 an den Kettengliedern 46 sicher befestigt sind, ist es doch zweckmäßig, sie so zu formen, daß sie ein wenig Spiel haben, damit sie gegenüber den Kettengliedern flexibel sind und sich bewegen können, um geringe Fluchtungsfehler zwischen der getriebenen Kette 44 und der antreibenden Kette 66 auszugleichen. Obgleich die ersten vorspringenden Elemente 82 als an den Innenlaschen 52 befestigt und die zweiten vorspringenden Elemente 90 als an den Außenlaschen 60 befestigt dargestellt sind, liegt es doch im Rahmen der vorliegenden Erfindung, die Verhältnisse so umzudrehen, daß die ersten vorspringenden Elemente 82 an den Außenlaschen 60 und die zweiten vorspringenden Elemente 90 an den Innenlaschen 52 befestigt werden. Die Einzelheiten des Verriegelungsmechanismus zwischen den vorspringenden Elementen 80 und der treibenden Kette 66 werden weiter unten beschrieben werden.

Wendet man sich jetzt der treibenden Kette 66 zu, so erkennt man, daß sie im wesentlichen aus den gleichen Elementen konstruiert ist wie die getriebene Kette 44, d.h., daß es Innenlaschen 100 und 102 und Rollen 104 und 106 gibt, die auf nicht näher dargestellten Hülsen angeordnet sind, welche sich zwischen den Innenlaschen 100 und 102 befinden. Ferner sind Außenlaschen 108 und 110 vorgesehen, um benachbarte Kettenglieder durch Zapfen 112 und 114 zu verbinden, welche durch die Rollen 104 und 106 hindurchgehen, um benachbarte Antriebsketten wieder miteinander zu verbinden.

Die Antriebskette 66 hat ein Verriegelungsmittel 68, welches Plattenelementmittel 116 aufweist. Das Plattenelementmittel besteht aus mehreren ersten Plattenelementen 118, die aus im wesentlichen rechteckigen Platten hergestellt sind, von denen jede eine im wesentlichen flache obere Randfläche 120 mit einem darin eingeformten, randoffenen Plattenschlitz 122 und eine gegenüberliegende, im wesentlichen flache untere Randfläche 124 aufweist. Mehrere zweite Plattenelemente 126 bestehen ebenfalls aus im wesentlichen rechteckigen Platten, von denen jede eine im wesentlichen flache obere und untere Randfläche 128 bzw. 130 aufweist.

Die ersten Plattenelemente 118 sind an den Außenlaschen 108 und 110 durch beliebige Mittel, wie beispielsweise Schweißverbindungen 132, befestigt. Die ersten und zweiten Plattenelemente 118 und 126 sind jeweils miteinander abwechselnd auf der ganzen Länge der treibenden Kette 66 angeordnet. In dem ersten treibenden Abschnitt 70 haben die Plattenelemente jedoch eine solche Lage, daß die flache obere Randfläche 128 des zweiten Plattenelementes 126 gegen die im wesentlichen flache untere Randfläche 124 des ersten Plattenelementes 118 und die im wesentlichen flache obere Randfläche 120 des ersten Plattenelementes mit dem Plattenschlitz 122 gegen die im wesentlichen flache untere Randfläche 130 des zweiten Plattenelementes 126 stößt, so daß sich zwischen diesen Platten eine Öffnung oder Ausnehmung 133 ergibt. Die gegenseitige Anlage der Plattenelemente 118 und 126 in dem ersten treibenden Abschnitt 70 versteift die sonst flexible treibende Kette 66, um eine auf ihrer ganzen Länge steife Kette dadurch zu schaffen, daß die ersten und zweiten Plattenelemente gegeneinanderstoßen.

Um das Verständnis der Verriegelungskonstruktion 68 zu erleichtern, folgt jetzt eine Erläuterung des Zusammenwirkens zwischen den Vorsprüngen 80 und den Plattenelementen 116.

Der Verriegelungsmechanismus 68 verbindet den ersten treibenden Abschnitt 70 und den ersten angetriebenen Abschnitt 72, um den steifen Antriebsmechanismus 38 zu erzeugen. Man beachte, daß der erste treibende Abschnitt unmittelbar neben dem ersten getriebenen Abschnitt angeordnet ist, wie dies in Fig. 4 dargestellt ist. Hierbei sind die treibende Kette 66 und die angetriebene Kette 44 in einem Winkel von annähernd 90° zueinander angeordnet. Mit anderen Worten: Die Gelenkbolzen 62 und 64 der angetriebenen Kettenglieder 48 stehen annähernd in einem Winkel von 90° zu den Gelenkbolzen 112 und 114 der treibenden Kette 66. Wie in Fig. 4 zu erkennen ist, stoßen die ersten vorspringenden Elemente oder Stützelemente 82 gegen die ersten Plattenelemente 118. Ferner greifen die zweiten vorspringenden Elemente oder Verriegelungselemente 90 in die Ausnehmungen 133 zwischen den ersten und zweiten Plattenelementen 118 und 126 derart ein, daß der Vorsprungsschlitz 96 in den Schlitz 122 eingreift und die Oberfläche gegen die untere Randfläche 130 des zweiten Plattenelementes 126 stößt. Gleichzeitig sind hierdurch die vorspringenden Elemente oder Verriegelungselemente 90 in der Ausnehmung 133 verriegelt. Die ersten vorspringenden Elemente 82 stoßen gegen die Plattenelemente 118 und halten einen konstanten Abstand zwischen der treibenden Kette und der angetriebenen Kette aufrecht, wobei sie die Steifigkeit des Antriebsmechanismus 38 vergrößern.

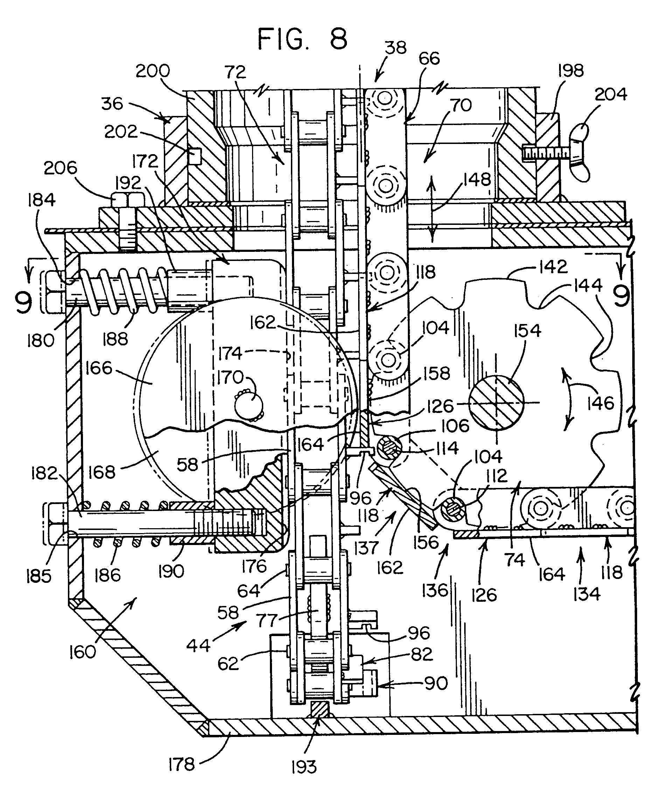

In den Fig. 1 und 8 ist ein zweiter treibender Abschnitt 134 dargestellt, der mit einem Übergangsabschnitt 137 an ein erstes Ende 136 des ersten treibenden Abschnittes 70 angeschlossen ist. Der zweite Abschnitt 134 der treibenden Kette erstreckt sich quer zu dem ersten treibenden Abschnitt und ist mit einem zweiten Ende 138 an eine Antriebskettentrommel 140 angeschlossen, die auf jede gewünschte Weise angetrieben werden kann. Man erkennt, daß die Verwendung einer Antriebskettentrommel den Einsatz einer langen Kette ermöglicht, die in kompakter Weise auf relativ kleinem Raum untergebracht werden kann, was insbesondere bei transportablen Einrichtungen, wie bei dem in Fig. 2 gezeigten Fahrzeug 11 von Vorteil ist.

Wie dies in den Fig. 1, 8 und 9 dargestellt ist, ist an der Vereinigungsstelle der ersten und zweiten Antriebskettenabschnitte 70 und 134 ein Antriebskettenstern 74 vorgesehen, der die treibende Kette 66 erfaßt und den ersten treibenden Abschnitt in seine gestreckte Lage in Richtung des Pfeiles 148 ausfährt oder aus dieser zurückzieht. Diese Längsbewegung der Antriebsvorrichtung bewirkt das Teleskopieren der Mastabschnitte in jede gewünschte Stellung zwischen der voll eingefahrenen und voll ausgefahrenen Stellung.

Der Antriebskettenstern 74 hat eine im wesentlichen zylindrische Umfangsfläche 142 und mehrere Kettennuten 144, die auf der Umfangsfläche 142 im wesentlichen gleichen Abstand voneinander haben und in die die Rollen 104 und 106 der Kette eingreifen, wenn sich der Antriebskettenstern im Uhrzeigersinn oder entgegen dem Uhrzeigersinn dreht, wie dies durch den Pfeil 146 angedeutet ist. In Fig. 8 veranlaßt eine Bewegung des Kettensternes 74 im Uhrzeigersinn die Kette, sich nach oben in gerader Längsrichtung zu bewegen und hierdurch die Mastabschnitte aufwärts zu ziehen. Umgekehrt veranlaßt eine Drehung des Antriebskettensternes entgegen dem Uhrzeigersinn die Antriebskette 66, sich nach unten zu bewegen und sich auf der Kettentrommel 140 aufzurollen. Die Drehung des Kettensternes 74 kann von einem Motor 150 erzeugt werden, der über ein Untersetzungsgetriebe 152 auf eine Welle 154 und damit schließlich auf den Antriebskettenstern 74 wirkt.

Die Drehung des Antriebskettensternes kann auch durch andere konventionelle Mittel und, falls gewünscht, auch von Hand ausgeführt werden.

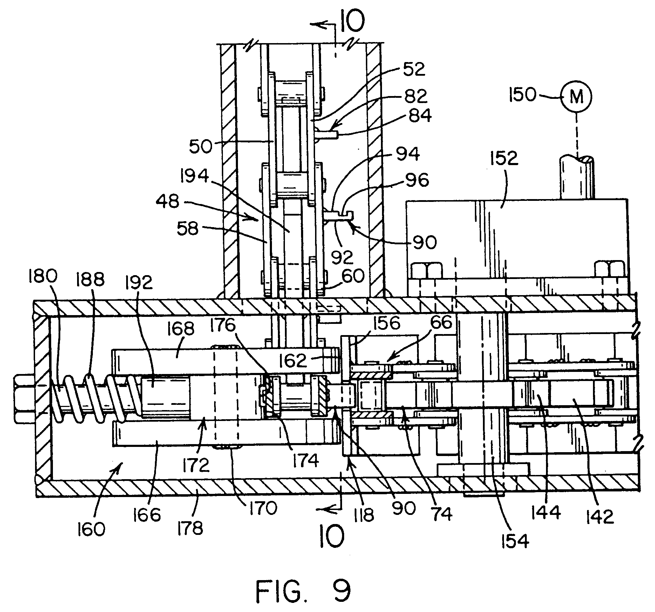

Im Betrieb des Antriebskettenrades 74 drückt dessen zylindrische Umfangsfläche 142 gegen die zweiten Plattenflächen 156 und 158 der ersten und zweiten Plattenelemente 118 bzw. 126, an denen die Antriebskette 66 befestigt ist. Wie in den Fig. 8 und 9 gezeigt, stößt die Umfangsfläche 142 gegen ein benachbartes, auf ihr aufliegendes Plattenelement und drückt dagegen, um es starr an einem benachbarten Kettenglied zu befestigen. Gleichzeitig drückt die zylindrische Umfangsfläche 142 auch die zweiten flachen Oberflächen 156 und 158 quer zur Längsrichtung des ersten treibenden Abschnittes 70 gegen den Abschnitt 72 der angetriebenen Kette. Dies führt dazu, daß sich die treibende Kette 66 gegen den Abschnitt 72 der angetriebenen Kette krümmt, wodurch die Steifigkeit der steifen Antriebsvorrichtung 38 reduziert wird. Um eine hohe Steifigkeit sicherzustellen, ist deshalb ein Druckmittel 160 vorgesehen, welches gegen die ersten Plattenoberflächen 162 und 164 der Plattenelemente 118 und 126 drückt und diese Plattenelemente gegen den Antriebskettenstern 74 preßt, um eine steife Verbindung zwischen den Platten des ersten Abschnittes der treibenden Kette sicherzustellen.

In Fig. 8 erkennt man, daß, wenn sich das Kettenrad 74 dreht, um die Kettenglieder des zweiten Abschnittes 134 in den ersten treibenden Abschnitt 70 zu bewegen, die zylindrische Umfangsfläche 142 auch die Neigung hat, die angetriebene Kette 44 des angetriebenen Abschnittes 70 quer zur Längsrichtung 148 zu bewegen, die beibehalten werden soll, um über den Verriegelungsmechanismus 38 eine steife Verbindung sicherzustellen. Um dieser Tendenz entgegenzuwirken, erzeugt das Druckmittel 160 eine Reaktionsdruckkraft in Richtung des Antriebskettensternes 74, um ein im wesentlichen paralles Fluchten der treibenden Kette 66 und der angetriebenen Kette 44 über die gesamten ersten treibenden und angetriebenen Abschnitte 72 und 70 aufrechtzuerhalten.

Das Druckmittel 160 kann erste und zweite zylindrische Stützrollen 166 und 168 aufweisen, die im Abstand voneinander angeordnet sind und den aus miteinander verbundenen Kettengliedern 48 bestehenden ersten Abschnitt 70 der treibenden Kette aufnehmen. Die zylindrischen Rollen 166 und 168 sind durch eine Achse 170 miteinander verbunden. Zwischen den zylindrischen Rollen ist ein Lagerblock 172 angeordnet und mit diesen über die Welle 170 verbunden. Eine erste Seite 174 des Stützblockes 172 erstreckt sich in Längsrichtung des ersten Abschnittes 72 der angetriebenen Kette und weist eine Nute 176 in ihrer Vorderfläche auf, welche die vorspringenden Zapfen 62 und 64 der angetriebenen Kettenglieder 48 aufnimmt. Die Nute ermöglicht den Außenlaschen 58 der Kettenglieder 48 der angetriebenen Kette unmittelbar an der Vorderfläche 174 des Stützblockes 172 anzuliegen. Während also die zylindrischen Rollen 166 und 168 gegen die treibende Kette 66 drücken, um eine steife Verbindung der gegeneinanderstoßenden Kettenglieder herzustellen, drückt der Stützblock 172 gegen die Kettenglieder 48 der angetriebenen Kette, um eine Steifigkeit der angetriebenen Kette 44 im ersten Abschnitt 72 zu erhalten. Das Druckmittel 160 befindet sich in einem Gehäuse 178, welches die Betätigungseinrichtung für den teleskopierbaren Mast 10 umschließt. In Öffnungen 184 und 185 dieses Gehäuses 178 sind Bolzen 180 und 182 vorzugsweise gleitend montiert. Diese Bolzen sind in den Stützblock 172 eingeschraubt und mit Federn 186 und 188 versehen, welche gegen Kragen 190 und 192 drücken, um gleichzeitig die zylindrischen Rollen 166 und 168 gegen die treibende Kette 66 zu drücken, während der Stützblock 172 gegen die angetriebene Kette 44 drückt. Es liegt im Rahmen der vorliegenden Erfindung, die auf die treibende Kette und die angetriebene Kette einwirkende Druckkraft durch Wahl der Federn 186 und 188 zu verändern. Obgleich eine spezifische Ausgestaltung dargestellt ist, um gleichzeitig gegen die treibende Kette und die angetriebene Kette zu drücken, liegt es doch auch im Rahmen der vorliegenden Erfindung, eine andere Vorrichtung vorzusehen, um die treibende und die getriebene Kette in ihren ersten Abschnitten 70 und 72 in einer sich in Längsrichtung 148 erstreckenden Achse zu halten.

Wie aus den Fig. 9 und 10 hervorgeht, hat die angetriebene Kette 44 einen ersten Abschnitt 172, der das Druckmittel 160 durchläuft, und einen zweiten Abschnitt 191, der auf eine Kettentrommel 195 aufgewickelt ist.Zwischen dem ersten Abschnitt 172 und dem zweiten Abschnitt 191 befindet sich ein Übergangsabschnitt 193. Dieser Übergangsabschnitt 193 hat ein Übergangselement 194 mit einer gekrümmten Oberfläche 196, auf der die Rollen 54 und 56 sich abwälzen und hierdurch die angetriebene Kette 44 leicht von der Querrichtung 197 in die gestreckte Längsrichtung 148 übergehen zu lassen.

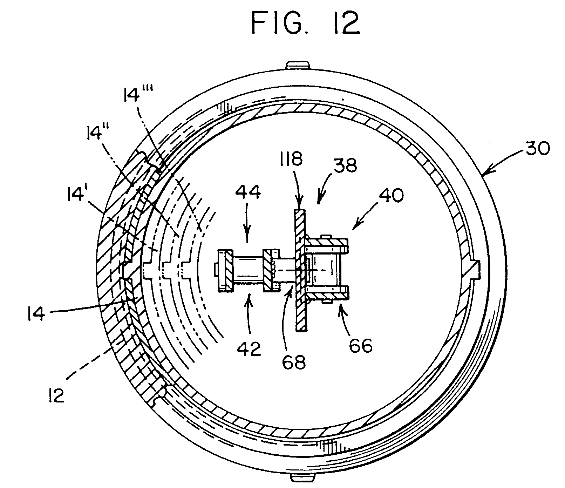

In den Fig. 2 und 11 sind die Einzelheiten der teleskopierbaren Mastabschnitte dargestellt. Der untere Mastabschnitt 12, wie er in Fig. 11 dargestellt ist, steckt in einem Kragen oder Flansch 198. Ein Ende des Mastabschnittes 12 kann einen Halsteil 200 aufweisen, mit einer Umfangsnute 202, die einen Gewindestift 204 aufnimmt, um den unteren Halbabschnitt in Stellung zu halten. Hierbei ist zu beachten, daß der Kragen 198 an der Trag- oder Gehäusekonstruktion 178 durch bekannte Mittel, beispielsweise durch Schrauben 206 befestigt sein kann. Der untere Mastabschnitt kann über die Oberseite des Fahrzeuges 11 hinausragen und mit einer Dichtungskonstruktion 208 und 210 versehen sein, um ein Eindringen von Feuchtigkeit ins Innere des Fahrzeuges 11 zu verhindern. Am oberen Ende des unteren Mastabschnittes 12 ist ein sich nach innen erstreckender Flansch 30 mit einer Dichtung 32 angeordnet, die an der äußeren Umfangsfläche eines Mastabschnittes 14 anliegt. Wenn sich der Mastabschnitt 14 am Flansch 30 entlangbewegt, werden Feuchtigkeit und andere Verunreinigungen aus der Umwelt daran gehindert, sich zwischen dem unteren Mastabschnitt 12 und dem mittleren Mastabschnitt 14 zu sammeln. Zusätzlich kann der Flansch 30 gegenüber dem Mastabschnitt 14 als Lagerfläche dienen. Wie man in Fig. 12 erkennt, sind die Mastabschnitte ineinander geschachtelt oder ineinander geschoben.

Im Inneren der Mastabschnitte kann eine Verdrahtung 310 angeordnet sein. Hierbei kann die Leitung mit ihrem einen Ende an das Gerät 18 an der Spitze des Mastes und mit ihrem anderen Ende an eine Strom- oder Signalquelle in irgendeinem anderen, beliebigen elektrischen Kreis im Mastträger, beispielsweise im Fahrzeug 11, angeschlossen sein. Die Leitung 310 kann durch eine nicht näher dargestellte Öffnung im Flansch 22 hindurchgeführt sein. Es liegt jedoch auch im Rahmen der Erfindung, die Leitung 310' außen am Mast hochzuführen, wie dies in Fig. 2 dargestellt ist.

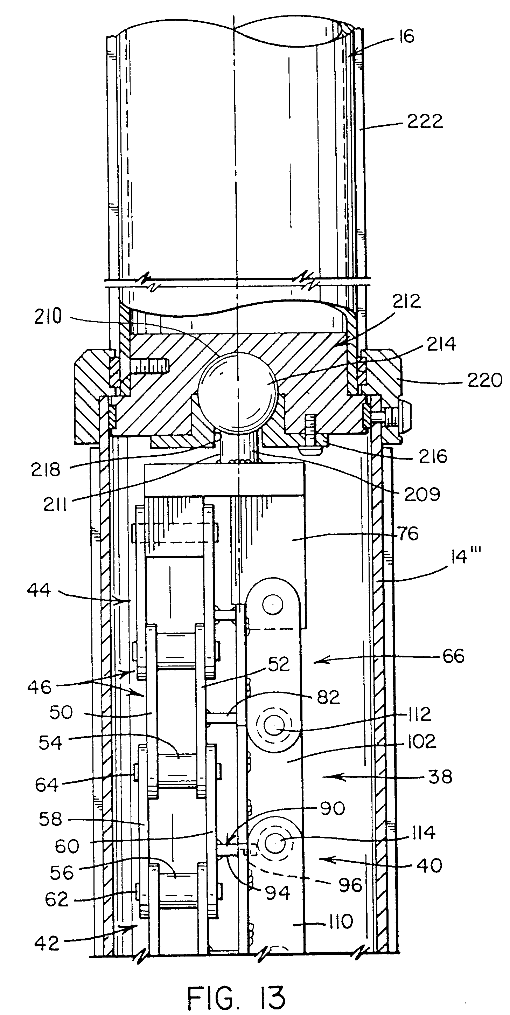

Im Betrieb wird der Antriebskettenstern 75 im Uhrzeigersinn gedreht, um den ersten Abschnitt der treibenden Kette 70 in der durch den Pfeil 148 angezeigten Richtung zu bewegen. Wie in Fig. 13 gezeigt, ist ein Ende der treibenden Kette 66 an ein Anschlußglied 76 angeschlossen. Gleichzeitig ist ein oberes Ende der angetriebenen Kette 44 auch an das Anschlußglied 76 angeschlossen. Auf der Oberseite des Anschlußgliedes 76 befindet sich ein zylindrischer Zapfen 209 mit einer gebogenen Oberfläche 211. Der innerste Mastabschnitt 16 hat einen als Stopfen ausgebildeten Boden 212, der am Boden des innersten Mastabschnittes 16 durch geeignete Mittel befestigt ist. In diesem Stopfen ist ein sphärisches Element 214 eingeschlossen und wird dort durch ein Verschlußelement 216 gehalten. Das Verschlußelement 216 hat eine Öffnung 218, welche das Verschlußelement 216 durchdringt und die größer ist als der Durchmesser des Zapfens 209, so daß dar Zapfen 209 sich bei einer Schwenkbewegung um das sphärische Element 214 frei bewegen und einstellen kann und Fluchtungsfehler zwischen dem steifen Antriebsmechanismus 38 und dem innersten Abschnitt 16 des Mastes hierdurch ausgeglichen werden.

Wenn sich der innerste Abschnitt 16 in seine in den Fig. 1 und 13 dargestellte, am meisten ausgezogene Stellung gewegt, stößt ein übergreifender Kragen 220, der in eine auf dem innersten Mastabschnitt 16 angeordnete Keilnut 222 eingreift, gegen den Stopfen 212 und verhindert eine weitere Bewegung gegenüber dem Mastabschnitt 14 in Aufwärtsrichtung. Wenn der innerste Mastabschnitt fortfährt, sich aufwärts zu bewegen, bewegt sich auch der am Kragen 220 befestigte Abschnitt, beispielsweise der Abschnitt 14''', weiter aufwärts. Wenn der Abschnitt 14'''voll ausgezogen ist, beginnt sich der nächste äußere Abschnitt, beispielsweise 14'', aufwärts zu bewegen. Diese Sequenz hält so lange an, bis der Mast vollständig ausgezogen ist. Man erkennt, daß die Bewegung der steifen Antriebsvorrichtung jederzeit gestoppt werden kann und hierdurch die Positionierung des Mastes genau gesteuert werden kann.

Wie aus Fig. 4 hervorgeht, hat jeder Mastabschnitt mindestens eine Öffnung 226, durch die ein Beobachter Kennmarken sehen kann, die auf die Kettenglieder entweder der treibenden Kette oder der angetriebenen Kette aufgedruckt sind, um die Höhe anzuzeigen, auf welche der Mast ausgezogen worden ist. Wenn die Mastabschnitte sich in ihrer voll eingeschobenen Stellung befinden, kann ein Beobachter die Erkennungsmarken auf den Ketten sehen. Wenn sich jedoch die Mastabschnitte aufwärts zu bewegen beginnen, kann der Durchblick versperrt werden. Es liegt deshalb innerhalb des Rahmens der vorliegenden Erfindung, falls gewünscht, zusätzliche Löcher in den Mastabschnitten vorzusehen, um genau die jeweilige Höhe bestimmen zu können.

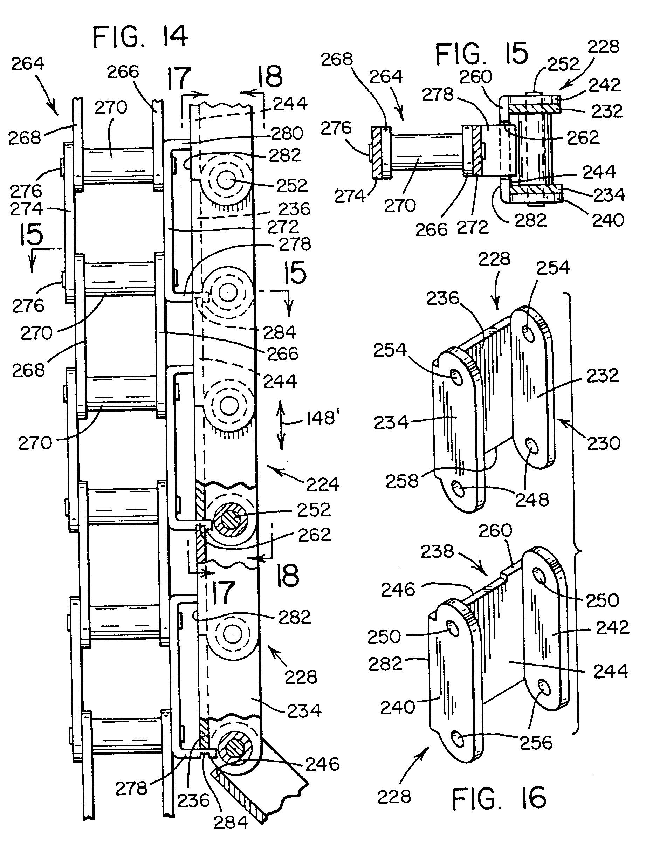

In Fig. 14 ist eine Abwandlung der ersten Ausführungsform der Erfindung gezeigt. Die Glieder 228 der treibenden Kette sind, wie in Fig. 16 dargestellt, so ausgebildet, daß das innere Glied 230 Innenlaschen 232 und 234 hat, die durch ein erstes Plattenelement 236 U-förmig verbunden sind. Falls gewünscht, können die Plattenelemente des inneren Kettengliedes mit diesem auch aus einem einzigen Materialstück hergestellt sein. Das äußere Kettenglied 238 hat Außenlaschen 240 und 242 und ein äußeres Plattenelement 244, das sich zwischen den beiden Außenlaschen erstreckt. Das Plattenelement 244 hat eine randoffene Nute 246. Die unteren Öffnungen 248 in den Innenlaschen sind mit den oberen Öffnungen 250 der Außenlaschen durch einen Stift 250 verbunden. In gleicher Weise sind die oberen Öffnungen 254 der Innenlaschen mit den unteren Öffnungen 256 der Außenlaschen durch einen Stift 252 verbunden. Wie bei der ersten Ausführungsform sind eine Hülse und eine Rolle auf den Gelenkstiften vorgesehen, um eine Standard-, Laschen- oder Rollenkette zu bilden. Wie bei der ersten Ausführungsform stößt die Stirnfläche 258 der ersten Platte 236 gegen die Stirnfläche 260 der Platte 244, so daß die Nute 246 und die Stirnfläche 258 eine Öffnung oder Ausnehmung 262 bilden.

Bei den Kettengliedern 264 der angetriebenen Kette sind zwischen zwei Innenlaschen 266 und 268 Hülsen und Rollen 270 angeordnet. Außenlaschen 272 und 274 sind mit den Innenlaschen durch einen Stift 276 verbunden.
Die Außenlasche 272 hat an jedem Ende vorspringende Finger 278 und 280, die mit den Platten 236 und 244 der treibenden Kette ebenso wie bei der ersten Ausführungsform zusammenwirken. Hierbei ist zu beachten, daß der Finger 280 genügend lang ist, um gegen die Oberfläche 282 der Platte 244 zu stoßen, während der Finger 278 eine Nute 284 aufweist, mit der er in die Öffnung 262 einfaßt.

Die Wirkungsweise der zweiten Ausführungsform ist im wesentlichen die gleiche wie bei der ersten Ausführungsform, d.h., wenn sich die angetriebenen Kettenglieder 264 in der Richtung 148 aufwärts- oder abwärtsbewegen, bewirken die in den Öffnungen 262 angeordneten Finger 278 gleichzeitig eine Bewegung der angetriebenen Kettenglieder 264.

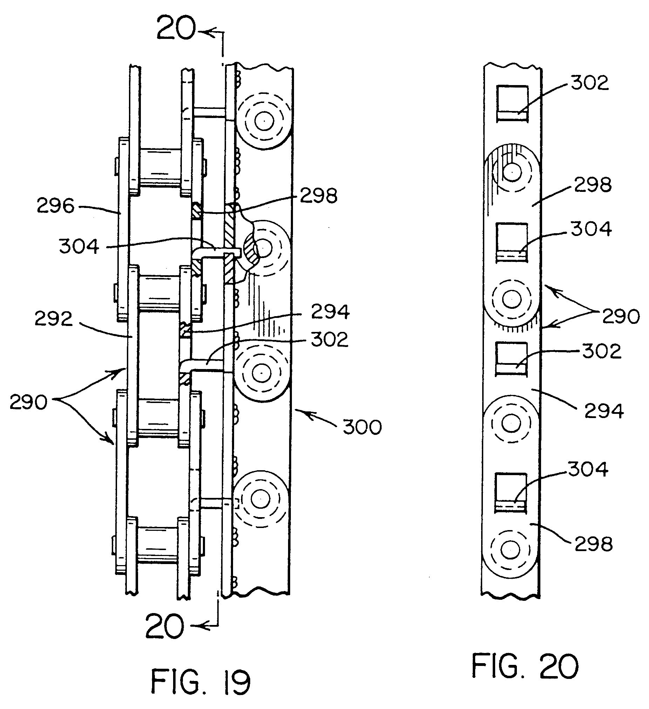

Eine dritte Ausführungsform ist in den Fig. 19 und 20 gezeigt. Die Kettenglieder 290 der angetriebenen Kette haben erste und zweite Innenlaschen 292 und 294 und erste und zweite Außenlaschen 296 und 298. Die Innenlaschen und Außenlaschen sind durch Stifte und Rollen wie bei den zuvor beschriebenen Ausführungsformen miteinander verbunden. Jede der Innenlaschen 294 und der Außenlaschen 298, die sich neben den Kettengliedern 300 der treibenden Kette befinden, haben angetriebene Finger 302 und 304, die aus den Laschen herausgedrückt oder herausgestanzt sein können. Diese Finger 302 und 304 sind so geformt, daß sie entweder gegen die Platten der treibenden Kette stoßen oder in die Öffnung der treibenden Kette 300 eingreifen, welche im wesentlichen ebenso ausgebildet ist, wie die treibende Kette 224 der zweiten Ausführungsform oder die treibende Kette 66,die unter Bezugnahme auf die erste Ausführungsform beschrieben wurde.

Sowohl die treibende Kette 66 als auch die angetriebene Kette 44 können aus Materialien hergestellt sein, die aus der Gruppe ausgewählt sind, welche Eisenmetalle, Nichteisenmetalle und nichtmetallische Materialien umfassen.

Obgleich die treibende Kette mit einer in ihr angeordneten Öffnung beschrieben wurden ist, welche einen Finger der angetriebenen Kette aufnimmt, liegt es auch im Rahmen der Erfindung, die Ketten so zu vertauschen, daß die treibende Kette die vorspringenden Finger aufweist und die angetriebene Kette Öffnungen hat, um die vorspringenden Finger aufzunehmen.

Obgleich die treibende Kette und die angetriebene Kette so beschrieben worden sind, daß sie auf Kettentrommeln aufgewickelt werden können, liegt es doch im Rahmen der vorliegenden Erfindung, die Ketten sich in jeder Richtung frei erstrecken zu lassen. D.h., die Ketten können auch auf einer Serpentinenbahn laufen oder, falls gewünscht, einfach in Längsrichtung von einem Bedienungsmann verlängert werden.

Die Erfindung wurde unter Bezugnahme auf eine bevorzugte Ausführungsform beschrieben. Es ist aber offensichtlich, daß viele Abwandlungen des teleskopierbaren Mastes möglich sind, ohne den Rahmen der in der nachfolgenden Ansprüche definierten Erfindung zu verlassen.

## Patentansprüche

1. Antrieb, insbesondere zum Aus- und Einfahren eines teleskopierbaren, langgestreckten Gegenstandes, wie beispielsweise eines Mastes, einer Antenne od.dgl., mit einem Antriebskopf (212) und einer langgestreckten, steifen Antriebsvorrichtung (38), die den Antriebskopf (212) zwischen einer ersten Stellung und einer zweiten Stellung im wesentlichen geradlinig bewegt und aus zwei flexiblen Ketten (40, 42) besteht, die im rechten Winkel zueinander angeordnet, mit je einem Ende am Antriebskopf (212) befestigt und zwischen der ersten Stellung und der zweiten Stellung des Antriebskopfes (212) zu der langgestreckten steifen Antriebsvorrichtung (38) verbindbar und verriegelbar sind, **dadurch gekennzeichnet, daß** die eine Kette eine treibende Kette (66) ist, an deren miteinander verbundenen Kettengliedern (46', 48') erste und zweite Plattenelemente (118, 126) befestigt sind, die sich bei gestreckter Kette (66) gegeneinander abstützen und die Kette versteifen und daß die andere Kette eine angetriebene Kette (44) ist, an deren Kettengliedern (46, 48) vorspringende erste und zweite Stütz- und Verriegelungselemente (82, 90) befestigt sind, welche die Plattenelemente (118, 126) der treibenden Kette (66) in deren gestrecktem ersten Abschnitt (70) abstützen und halten.

2. Antrieb nach Anspruch 1, **dadurch gekennzeichnet, daß** die ersten und zweiten Plattenelemente (118, 126) an den Kettengliedern (46', 48') der treibenden Kette (66) derart montiert sind, daß sie im gestreckten, ersten Abschnitt (70) der Kette (66) in der gleichen Ebene liegen und mit ihren einander zugewandten Randflächen (120, 130 bzw. 128, 124) gegeneinanderstoßen, von denen einzelne Randflächen (120) Ausnehmungen (122) aufweisen, in welche die zweiten Stütz- und Verriegelungselemente (90) eingreifen können, um die Plattenelemente (118, 126) zu halten und mitzunehmen.

3. Antrieb nach Anspruch 1 oder 2, **dadurch gekennzeichnet, daß** die Stütz- und Verriegelungselemente (90) Nuten (96) aufweisen, mit welchen sie einen Rand der Plattenelemente (118, 126) übergreifen und festhalten.

4. Antrieb nach einem der Ansprüche 1 bis 3, **dadurch gekennzeichnet,** daß die vorspringenden Stütz- und Verriegelungselemente (90) an den Kettengliedern (46, 48) der angetriebenen Kette (44) flexibel befestigt sind.

5. Antrieb nach einem der Ansprüche 1 bis 4, **dadurch gekennzeichnet,** daß die treibende Kette (66) und die angetriebene Kette (44) Laschenketten sind, und daß in dem ersten Abschnitt (70) die Kettenglieder (46' und 48') der treibenden Kette (66) unter einem Winkel zu den Kettengliedern (46 und 48) der angetriebenen Kette (44) angeordnet sind, und daß mindestens eine der beiden Ketten (44,66) einen zweiten, flexiblen Kettenabschnitt (134. bzw.191) aufweist, der sich quer zu dem gestreckten ersten Abschnitt (70 bzw. 72) bis zu einer Kettenvereinigungsstelle (137) erstreckt.

6. Antrieb nach einem der Ansprüche 1 bis 5, **gekennzeichnet durch** Kettentrommeln (140, 195) zum Auf- und Abwickeln der freien Enden (138, 191) der Ketten (66,44).

7. Antrieb nach einem der Ansprüche 1 bis 6, **dadurch gekennzeichnet,** daß an der Kettenvereinigungsstelle (137) Vorschubmittel (74) und Stützmittel (166, 168, 172) für die Ketten (66 u. 44) vorgesehen sind.

8. Antrieb nach einem der Ansprüche 1 bis 7, **dadurch gekennzeichnet,** daß die Stützmittel (166, 168,174) an einem Lagerblock (172) angeordnet sind, der mit Federmitteln (186,188) gegen die miteinander verbundenen Ketten (66,44) gedrückt wird, wobei das Vorschubmittel (74) als Widerlager dient.

9. Antrieb nach einem der Ansprüche 1 bis 8, **dadurch gekennzeichnet,** daß das Vorschubmittel ein drehend angetriebener Kettenstern (74) ist, in dessen Kettennuten (144) die Rollen (106) der treibenden Kette (66) eingreifen und an dessen Umfangsfläche (142) die Plattenelemente (118,126) anliegen, und daß die Stützmittel Stützrollen (166,168) für die Plattenelemente (118,126) der antreibenden Kette (66) und zwischen den Stützrollen angeordnete Gleit- oder Wälzflächen (174) für die angetriebene Kette (44) aufweisen.

10. Antrieb nach einem der Ansprüche 1 bis 9, **dadurch gekennzeichnet,** daß der Antriebskopf (212) mit einem Kugelgelenk (214,218) am innersten Teil (14''') eines zu teleskopierenden Gegenstandes befestigt ist.

11. Antrieb nach einem der Ansprüche 1 bis 10, **dadurch gekennzeichnet,** daß die Ketten (40 u. 42) Laschenketten sind, und daß die Laschen (100,102, bzw. 232, 234 bzw. 108, 110 bzw. 240, 242) eines jeden Kettengliedes (46 bzw. 46' bzw. 48 bzw. 48') der antreibenden Kette (66) mit einem Plattenelement (118 bzw. 238 bzw. 126 bzw. 236) U-förmig verbunden sind, dessen Länge dem Achsabstand der Gelenkbolzen (112, 114 bzw. 252 des jeweiligen Kettengliedes (46' bzw. 48') entspricht.

12. Antrieb nach einem der Ansprüche 1 bis 11, **dadurch gekennzeichnet,** daß die Laschen (232, 234 bzw. 240, 242) eines jeden Kettengliedes (230 bzw. 238) der antreibenden Kette mit einem Plattenelement (236 bzw. 244) aus einem Stück bestehen, und daß die Stütz- und Verriegelungselemente (280, 278) von den umgebogenen Enden der auf einer Seite der angetriebenen Kette (44) angeordneten Außenlaschen (272) der Kettenglieder (264) gebildet werden.

13. Antrieb nach einem der Ansprüche 1 bis 12, **dadurch gekennzeichnet,** daß die Stütz- und Verriegelungselemente von aus den Laschen (294,298) der Kettenglieder der angetriebenen Kette (44) herausgedrückten Lappen (302, 304) gebildet werden.

## Claims

1. A drive, in particular for extending and retracting a telescopic elongated item, for example a mast, an antenna or the like, comprising a drivehead (212) an elongated rigid drive mechanism (38), which moves the drivehead (212) essentially in a straight line between a first position and a second position and which comprises two flexible chains (40, 42) arranged at right angles to each other, attached with a respective end to the drivehead (212) and connectable and lockable between the first position and the second position of the drivehead (212) to the elongated rigid drive mechanism (38), **characterized in that** the one chain is a driving chain (66) to the interlinked chain elements (46', 48') of which are attached first and second plate elements (118, 126), which support each other when the chain (66) is extended and stiffen the chain, and that the other chain is a driven chain (44) to the chain elements (46, 48) of which are attached protruding first and second support and locking elements (82, 90) which support and hold the plate elements (118, 126) of the drive chain (66) in its extended first section (70).

2. A drive according to claim 1, **characterized in that** the first and second plate elements (118, 126) are mounted onto the chain elements (46', 48') of the drive chain (66) in such a manner that they lie in the extended first section (70) of the chain (66) in the same plane and abut with their edge surfaces (120, 130 or 128, 124) which are facing each other, of which individual edge surfaces (12) have cutouts (122) into which the second support and locking elements (90) can engage in order to hold and pickup the plate elements (118, 126).

3. A drive according to claim 1 or 2, **characterized in that** the support and locking elements (90) comprise grooves (96) by means of which they reach over and hold an edge of the plate elements (118, 126).

4. A drive according to one of claims 1 to 3, **characterized in that** the protruding support and locking elements (90) are flexibly mounted onto the chain elements (46, 48) of the driven chain (44).

5. A drive according to one of claims 1 to 4, **characterized in that** the driving chain (66) and the driven chain (44) are butt-joint chains, and in the first section (70) are arranged the chain elements (46' and 48') of the drive chain (66) at an angle to the chain elements (46 and 48) of the driven chain (44), and at least one of the two chains (44, 66) comprises a second flexible chain section (134 or 191) which extends transversely to the elongated first section (70 or 72) up to a chain joining point (137).

6. A drive according to one of claims 1 to 5, **characterized by** chain drums (140, 195) for reeling the free ends (138, 191) of the chains (66, 44) on or off.

7. A drive according to one of claims 1 to 6, **characterized in that** feed means (74) and support means (166, 168, 172) for the chains (66 and 44) are provided at the chain-joining point (137).

8. A drive according to one of claims 1 to 7, **characterized in that** the support means (166, 168, 174) are arranged on a mounting block (172) which is pressed by spring means (186, 188) against the interconnected chains (66, 44) and that the feed means (74) serves as an abutment.

9. A drive according to one of claims 1 to 8, **characterized in that** the feed means is a rotatingly driven chain star (74), into the chain grooves (144) of which the rollers (106) of the driving chain (66) engage and the peripheral surface (142) of which is abutted by the plate elements (118, 126), and the support means comprise support rollers (166, 168) for the plate elements (118, 126) of the driving chain (66) and slide- or roller surfaces (174) between the support rollers for the driven chain (44).

10. A drive according to one of claims 1 to 9, **characterized in that** the drivehead (212) is mounted with a ball joint (214, 1218) onto the innermost part (14''') of a telescopic item.

11. A drive according to one of claims 1 to 10, **characterized in that** the chains (40 and 42) are butt-joint chains, and the but-joints (100, 102 or 232, 234 or 108, 110 or 240, 242) of each chain element (46 or 46' or 48 or 48') of the driving chain (66) are connected in the form of a U-shape to a plate element (118 or 238 or 126 or 236), the length of which corresponds with the axis distance of the hinged bolts (112, 114 or 252 of the respective chain element (46' or 48').

12. A drive according to one of claims 1 to 11, **characterized in that** the butt-joints (232, 234 or 240, 242) of each chain element (230 or 238) of the driving chain are made in one piece with a plate element (236 or 244), and that the support and locking elements (280, 278) are formed by the bent ends of external butt-joints (272) of the chain elements (264) which are arranged on one side of the driven chain (44).

13. A drive according to one of claims 1 to 12, **characterized in that** the support and locking elements are formed by flaps (302, 304) which are pushed out of the chain elements of the driven chain (44).

## Revendications

1. Entraînement, en particulier pour le déploiement et la rentrée d'un objet allongé télescopique, comme par exemple un mât, une antenne ou similaires, comportant une tête d'entraînement (212) et un dispositif rigide allongé d'entraînement (38) qui déplace la tête d'entraînement (212) entre une première position et une seconde position, essentiellement en ligne droite, et qui est constitué de deux chaînes flexibles (40, 42) qui sont disposées à angle droit l'une par rapport à l'autre, qui sont fixées chacune par une extrémité à une tête d'entraînement (212) et qui peuvent être reliées et verrouillées au dispositif rigide d'entraînement (38) allongé, entre la première position et la seconde position de la tête d'entraînement (212), caractérisé en ce qu'une des chaînes est une chaîne motrice (66), des premiers et des seconds éléments en plaque (118, 126) étant fixés à ses éléments de chaîne (46', 48') reliés les uns aux autres, s'appuyant l'un contre l'autre lorsque la chaîne (66) est étirée, et raidissant la chaîne, et en ce que l'autre chaîne est une chaîne entraînée (44), des premiers et des seconds éléments de soutien et de verrouillage (82, 90) étant fixés à ses éléments de chaîne (46, 48), et soutenant et maintenant les éléments en plaque (118, 126) de la chaîne motrice (66) dans leur premier tronçon allongé (70).

2. Entraînement selon la revendication 1, caractérisé en ce que les premiers et les seconds éléments de chaîne (118, 126) sont montés sur les éléments de chaîne (46', 48') de la chaîne motrice (66) de telle sorte que dans le premier tronçon (70) étendu de la chaîne (66) ils soient situés dans le même plan et viennent buter l'un contre l'autre par leurs surfaces de bordure (120, 130) et (128, 124) tournées l'une vers l'autre, des surfaces individuelles de bordure (120) présentant des découpes (122) dans lesquelles les seconds éléments de soutien et de verrouillage (90) peuvent s'engager pour retenir et entraîner les éléments en plaque (118, 126).

3. Entraînement selon la revendication 1 ou 2, caractérisé en ce que les éléments de soutien et de verrouillage (90) présentent des rainures (96) par lesquelles ils accrochent et immobilisent un bord des éléments en plaque (118, 126)

4. Entraînement selon l'une des revendications 1 à 3, caractérisé en ce que les éléments de soutien et de verrouillage (90) en saillie sont fixés de manière flexible sur les éléments de chaîne (46, 48) de la chaîne entraînée (44).

5. Entraînement selon l'une des revendications 1 à 4, caractérisé en ce que la chaîne motrice (66) et la chaîne entraînée (44) sont des chaînes à plaquettes, et en ce que dans le premier tronçon (70) les éléments de chaîne (46' et 48') de la chaîne motrice (66) sont disposés en formant un angle par rapport aux éléments de chaîne, et en ce qu'au moins une des deux chaînes (44, 66) présente un second tronçon flexible de chaîne (134, ou 191) qui s'étend transversalement par rapport au premier tronçon étendu (70 ou 72), jusqu'à un point de jonction des chaînes (137).

6. Entraînement selon l'une des revendications 1 à 5, caractérisé par des tambours de chaîne (140, 195) pour l'enroulement et le déroulement des extrémités libres (138, 191) des chaînes (66, 44).

7. Entraînement selon l'une des revendications 1 à 6, caractérisé en ce que des moyens d'avancement (74) et des moyens de soutien (166,168,172) sont prévus au point de jonction des chaînes (137) pour les chaînes (66 et 44).

8. Entraînement selon l'une des revendications 1 à 7, caractérisé en ce que les moyens de soutien (166, 168, 174) sont disposés sur un bloc de palier (172) qui est poussé contre les chaînes (66, 44) reliées l'une à l'autre par des moyens à ressort (186, 188), le moyen d'avancement (74) servant de contre-palier.

9. Entraînement selon l'une des revendications 1 à 8, caractérisé en ce que le moyen d'avancement est un pignon rotatif (74) pour chaîne entraînée, les galets (106) de la chaîne motrice (66) s'engageant dans des rainures de chaînes (144) de ce pignon de chaîne (74), et les éléments en plaque (118, 126) reposant contre la surface périphérique (142) de ce pignon de chaîne (74), et en ce que les moyens de soutien présentent des galets de soutien (166, 168) pour les éléments en plaque (118, 126) de la chaîne motrice (66), et présentent entre les galets de soutien des surfaces de glissement ou de roulement (174) pour la chaîne entraînée (44).

10. Entraînement selon l'une des revendications 1 à 9, caractérisé en ce que la tête d'entraînement (212) est fixée par une articulation sphérique (214, 218) sur la partie la plus intérieure (14''') d'un objet à déplacer télescopiquement.

11. Entraînement selon l'une des revendications 1 à 10, caractérisé en ce que les chaînes (40, et 42) sont des chaînes à plaquettes , et en ce que les plaquettes (100, 102 ou 232, 234 ou 108, 110 ou 240, 242) d'un élément quelconque de chaîne (46, 46' ou 48 ou 48') de la chaîne motrice (66) sont reliés en forme de U à un élément en plaque (118 ou 238 ou 126 ou 236) dont la longueur correspond à l'entre-axe du boulon d'articulation (112, 114 ou 252) de chaque élément de chaîne (46' ou 48').

12. Entraînement selon l'une des revendications 1 à 11, caractérisé en ce que les plaquettes (232, 234, 24O, 242) de chaque élément de chaîne (230 ou 238) de la chaîne motrice sont constitués d'une seule pièce avec un élément en plaque (236 ou 244) et en ce que les éléments de soutien ou de verrouillage (280, 278) sont formés par les extrémités repliées des plaquettes extérieures (272) des éléments de chaîne (264), disposées sur un côté de la chaîne entraînée (44).

13. Entraînement selon l'une des revendications 1 à 12, caractérisé en ce que les éléments de soutien et de verrouillage sont formés par des lèvres (302, 304) repoussées hors des plaquettes (294, 298) des éléments de chaîne de la chaîne entraînée (44).
